# EUROPEAN PATENT APPLICATION

(11) **EP 3 421 005 A1**
(43) Date of publication of application: **02.01.2019**
(21) Application number: 18179879.4
(22) Date of filing: 26.06.2018
(51) Int. Cl.: A61C 8/00

(54) **DENTAL PROSTHETIC DEVICE**

(30) Priority: 26.06.2017 IT 201700070869
(71) Applicant: Gallicchio, Antonio, 33070 Caneva (PN) (IT)
(72) Inventor: Gallicchio, Antonio, 33070 Caneva (PN) (IT)
(74) Representative: Petraz, Gilberto Luigi

(57) **Abstract**

Dental prosthetic device (10) that comprises an osseo-integratable implant (11), an accessory body (12), such as a stump, a cap, a prosthetic transferor or other similar or comparable accessory body, and connection means (13) to connect the implant (11) to the accessory body (12) in a precise, stable and esthetically correct manner.

## Description

### FIELD OF THE INVENTION

Embodiments of the present invention concern a dental prosthetic device, for dental use, of an osseo-integratable type and usable in the field of dental prostheses.

### BACKGROUND OF THE INVENTION

Dental prosthetic devices are known, comprising an osseo-integratable implant in the maxillary or mandibular bone and an accessory body which can be associated with it, such as an abutment, a cap, or other prosthetic components intended to restore the masticatory, aesthetic and phonetic function and the gnathological coordination of patients, eliminating the need for traditional mobile prostheses.

Some known dental prosthetic devices typically require a multiplicity of components that make their use and/or their production complex and articulated.

Dental prosthetic devices are known, an example of which is described in US-A-2012/0178049, in which the implant is attached to the accessory body by means of a screw inserted in a through hole present in the accessory body and/or by attachment portions, such as mating conical pairs.

However, these known solutions are not very efficient since the connection between the implant and the accessory body is often not precise, stable and/or aesthetically correct.

This can promote the development of unwanted infiltrations between the implant and the accessory body which can generate infections and/or wear on both the implant and the accessory body.

In addition to not guaranteeing a stable mechanical seal between the implant and the accessory body, these known solutions require a plurality of complex interventions for their installation which are not always performed correctly.

This causes mechanical stresses on the application site which, in the most severe cases, can cause the breakage of parts of the dental prosthetic device, such as for example the connection screw or the attachment portions.

Another example of a dental prosthetic device is described in WO-A-2015/093673 which comprises an implant provided with a blind hole having at the bottom of the latter two wider sections. Through the blind hole it is possible to insert the stem of an accessory body. The accessory body is provided with a pair of elastically deformable fins which are positioned, during use, in the wider sections. This solution is particularly complex to achieve and does not ensure a stable connection over time of the accessory body to the implant.

Another example of an implant is described in document US-A-2005/0250072 which comprises an implant provided at one end with a bayonet-type attachment portion configured to allow connection with an accessory body. The accessory body is provided, in turn, with a housing seating suitable to couple with the bayonet-type attachment portion of the implant. Moreover, an elastic element is inserted into the housing seating which thrusts the accessory body in reciprocal distancing from the implant and increases the retaining action exerted by the bayonet attachment.

This conformation, however, makes the implant particularly complex to achieve and allows infiltrations of liquids into the housing seating with possible occurrence of infections.

A dental implant is also known from document US-A-2014/0272788 that comprises an implant, attachable during use to a patient's bone part, and provided with a blind housing seating in which grooves are made for a bayonet-type coupling.

The implant is coupled with an accessory body provided, at one end, with an attachment portion having protruding teeth that can be inserted and coupled, during use, in grooves made in the housing seating of the dental implant. This solution, however, does not guarantee a stable connection of the accessory body on the implant, with problems of reciprocal disconnection.

There is therefore a need to perfect and make available a dental prosthetic device which overcomes at least one of the disadvantages of the state of the art and which guarantees a stable, precise and aesthetically correct connection which is also easy to install.

There is also the need to perfect and make available an implant and an accessory body able to be connected to each other in order to overcome at least one of the disadvantages of the state of the art.

The present invention therefore intends to provide a dental prosthetic device which has a stable and precise connection between the osseo-integratable implant and the accessory body, preventing the development of undesired infiltrations.

The present invention also intends to provide a simple dental prosthetic device which does not require complex and articulated operations for its installation and/or construction and which at the same time guarantees an efficient sealing of the implant and the accessory body and reduces mechanical stresses during installation.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention concerns a dental prosthetic device that comprises an osseo-integratable implant, an accessory body such as a stump, a cap, a prosthetic transferor or other similar or comparable accessory body, and connection means provided in the implant and in the accessory body to connect the implant to the accessory body.

In accordance with one aspect of the present invention, the connection means comprise an attachment portion protruding from one end of the implant or of the accessory body and provided with fins protruding radially from the attachment portion itself, and an aperture made in one end of the other of either the accessory body or the implant, and provided with housing seatings made radially in the aperture and configured to house one of the fins.

The attachment portion and the aperture define a bayonet-type coupling.

In accordance with another aspect of the invention, the attachment portion is provided with a support base with a flared conformation with a conicity that narrows toward the respective end in which the attachment portion is made.

The reception aperture of the attachment portion is made in a base surface with a concave conformation having a mating shape with the support base. The support base is located in close contact with the base surface and the connection means are configured to ensure their reciprocal contact.

Thanks to the configuration of the connection means it is possible to make a stable connection in a simple, precise and esthetically correct manner between the implant and the accessory body, able to prevent the development of unwanted infiltrations typical of dental prosthetic devices with screws or using additional components.

This configuration allows to install and/or make the parts that make up the dental prosthesis without needing complex and articulated operations, also reducing mechanical stresses during installation.

According to possible solutions, the attachment portion has a head portion opposite the end from which the attachment portion extends and from whose perimeter the fins extend, each for a specific angle of opening, and each of said housing seatings extends into the perimeter of the aperture for an angle of opening equal to a corresponding angle of opening of one of the fins.

According to possible embodiments, the fins and the housing seatings are angularly equidistant, and at least one of the fins and of the housing seatings extends with a bigger angle of opening than at least another of the fins and at least another of the housing seatings respectively.

In accordance with possible solutions, the fins have an inclined plane on the surface most distant from the end from which the attachment portion protrudes, said inclined plane being configured to generate a frictional connection in contact with the innermost wall of the aperture.

According to possible solutions, the attachment portion comprises an abutment portion located between one of the fins and the end from which the attachment portion protrudes and configured to define, in cooperation with an abutment body located in the aperture, the end-of-travel position that limits the rotation between the implant and the accessory body.

In accordance with possible embodiments, the attachment portion is provided with a support base located on the end from which the attachment portion protrudes and having a perimeter edge.

According to possible embodiments, the aperture is provided with a clamping portion configured to clamp the perimeter edge by mechanical interference.

According to possible embodiments, the end from which the attachment portion protrudes has a surface groove configured to accommodate the edge of the base of a dental prosthesis.

According to possible formulations, the present invention also concerns an osseo-integratable implant and an accessory body such as a stump, a cap, a prosthetic transferor or other similar or comparable accessory body, provided at one end with connection means to connect the implant to the accessory body.

According to a possible formulation, a method to connect an osseo-integratable implant to an accessory body such as such as a stump, a cap, a prosthetic transferor or other similar or comparable accessory body, provides to insert a protruding attachment portion provided with fins protruding radially from the attachment portion itself in an aperture made in the end of the other of either the accessory body or the implant, and provided with housing seatings made radially in the aperture, and to rotate the attachment portion in the aperture until each of the fins is housed in the housing seatings.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view in section, partly exploded, of a dental prosthetic device according to possible embodiments of the present invention, with which a dental prosthesis is associated;
- fig. 2 is a perspective view in section of the dental prosthetic device in fig. 1;
- figs. 3 and 4 are two perspective views of two implants according to two possible embodiments of the present invention;
- figs. 5 and 6 are two perspective views of two implants according to two other possible embodiments of the present invention;
- fig. 7 is a perspective view from below of fig. 5;
- figs. 8 and 9 are two section views of two embodiments of a dental prosthetic device;
- fig. 8a is an enlarged detail of fig.8;
- figs. 10-13 are plan views of possible embodiments of the connection means;
- fig. 14 is a section view of a possible accessory body;
- figs. 15 and 16 are two perspective views of two possible accessory bodies;
- figs. 17 and 18 are two perspective views of possible implants according to two embodiments of the present invention;
- fig. 19 is a front view of fig. 3;
- fig. 20 is a front view of fig. 4;
- fig. 21 is a section view of a variant embodiment of the present invention.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Embodiments described here, with reference to the drawings, concern a dental prosthetic device 10 for dental use which comprises an osseo-integratable implant 11, an accessory body 12 and connection means 13 to connect the implant 11 to the accessory body 12.

By accessory body 12 we mean, for example, an abutment, a cap, a prosthetic transferor or other prosthetic components intended to restore the masticatory, aesthetic and phonetic function and the gnathological coordination of a patient, or to allow the association of an abutment and therefore of a dental prosthesis 14 to the implant 11.

The dental prosthetic device 10 in its entirety, or some of its components, can be made of biocompatible metal material, for example titanium.

For example, the implant 11 can be made of a material that has undergone a sanding treatment and/or another treatment to obtain an etched surface.

According to possible embodiments, the implant 11 comprises an oblong stem 15 which extends in a linear direction.

The implant 11 is provided with a first end 16a and a second end, opposite the first end 16a.

According to possible embodiments, the stem 15 can have various shapes such as cylindrical, conical or blade shape, that is to say flat, tapered, or with a polygonal cross section, circular, or with possible protruding portions.

Like the implant 11, the accessory body 12 is also provided with a first end 16b and a second end, opposite its first end 16b.

The accessory body 12 can have a truncated cone, conical or other solid shape.

The implant 11 can comprise a threaded portion 17 able to insert and keep permanently associated part of the implant 11 itself into the bone site of a patient.

The stem 15 can have a truncated cone shape, at least in the terminal part of the threaded portion 17. This facilitates insertion of the threaded portion 17 into the bone site.

The threaded portion 17 can be self-tapping, that is, such as to make a threading in the bone site when it is inserted.

The threaded portion 17 can extend along part of the extension of the stem 15, as shown in the attached drawings, or as far as an end 16 of the stem 15 itself.

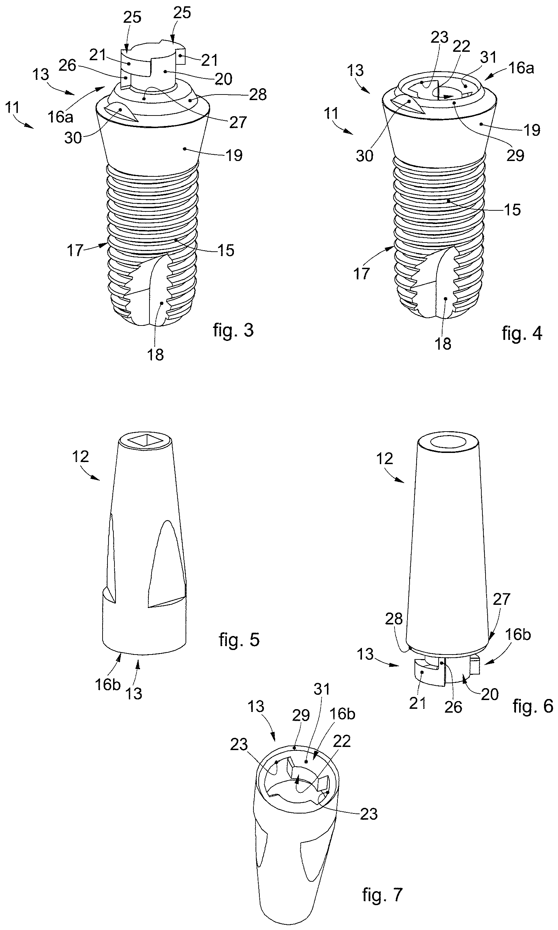

According to possible embodiments, the threaded portion 17 can have in its most extreme part one or more vertical or inclined cuts able to define a block portion 18 (figs. 3 and 4).

When the block portion 18 is inserted into the bone site and is osseo-integrated therein, the implant 11 has greater stability, since the block portion 18 impedes the rotation of the implant 11 in the bone site.

The implant 11 can comprise a smooth portion 19 having a flared shape that extends from the threaded portion 17 toward the end 16a of the implant 11 in a divergent manner.

According to one aspect of the present invention, the connection means 13 are provided in the implant 11 and in the accessory body 12.

The connection means 13 comprise an attachment portion 20 intended to be received in a respective aperture 22.

One of either the attachment portion 20 or the aperture 22 is made in the implant 11, while the other is made in the accessory body 12.

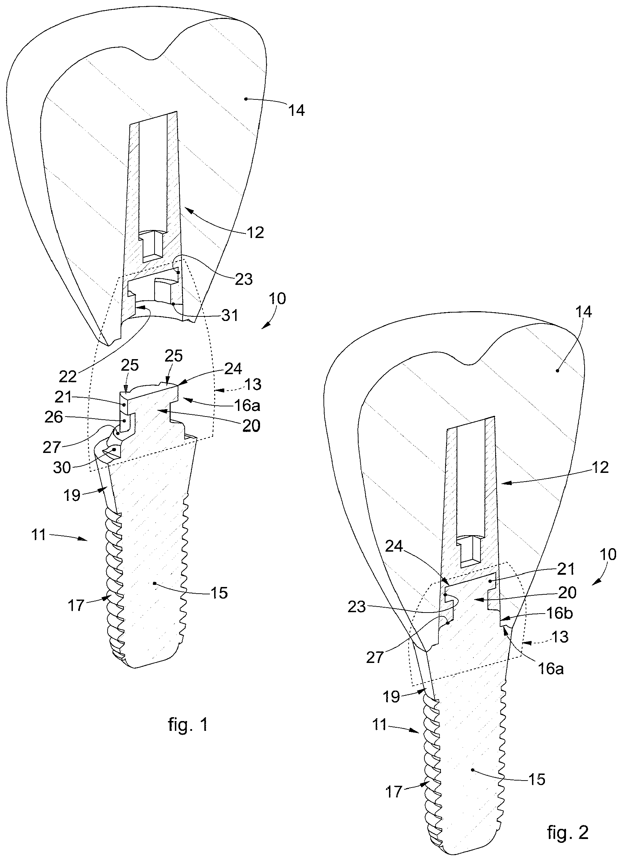

In the embodiments shown with reference to figs. 1-3, 5, 7, 8, 17, 19 and 20, the attachment portion 20 protrudes from the end 16a of the implant 11 and the aperture 22 is made at the end 16b of the accessory body 12.

According to some variants, (figs. 4, 6, 9, 18) the attachment portion 20 is made in the end 16b of the accessory body 12 while the aperture 22 is made in the end 16a of the implant 11.

The attachment portion 20 and the aperture 22 are configured to couple in a bayonet-shaped coupling.

In some embodiments, the attachment portion 20 is provided with fins 21 protruding radially from the attachment portion 20 itself, and the aperture 22 is provided with housing seatings 23 which extend radially in the aperture 22. The fins 21 and the housing seatings 23 have a mating shape so as to guarantee a solid and effective connection between the implant 11 and the accessory body 12.

According to possible embodiments, the number of housing seatings 23 is the same as the number of fins 21.

According to possible embodiments (figs. 3, 6, 10 and 17), there can be two fins 21.

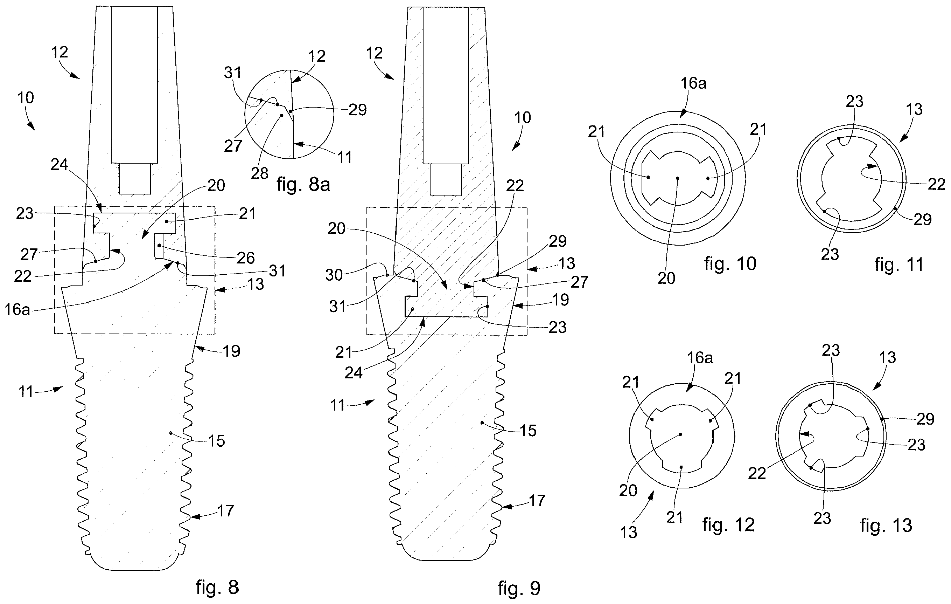

According to other embodiments (fig. 12), there can be three fins 21.

In accordance with possible embodiments, the attachment portion 20, or alternatively the aperture 22, are made on the end 16a of the implant 11 opposite the one where the threaded portion 17 ends.

According to possible embodiments, the end 16a can be put in correspondence with the smooth portion 19, or in correspondence with the bigger base of the flare of the smooth portion 19.

The smooth portion 19 can have a variable length in relation to the mucosal tract of the patient, so as to guarantee an effective aesthetic and functional solution.

According to possible embodiments, the attachment portion 20 can have a cylindrical shape emerging from the central part of the end 16a, 16b of the implant 11 or of the accessory body 12 in which it is made.

According to possible solutions, the attachment portion 20 also has a head portion 24 from which the fins 21 protrude laterally. The latter can extend along the perimeter of the head portion 24 for a specific opening angle for each of the fins 21.

According to possible embodiments, in the case of a cylindrical attachment portion 20, the fins 21 in relation to the opening angle each define a sector of a cylindrical crown.

As provided for the fins 21, each of the housing seatings 23 extends in the perimeter of the aperture 22 for an opening angle equal to a corresponding opening angle of one of the fins 21.

The fins 21 can be disposed angularly equidistant. For example, they can be located symmetrically with respect to orthogonal planes. This allows to balance the stresses, or to discharge the stresses acting on the connection means 13.

If two fins 21 are provided, they can be disposed at 180° from each other. If three fins 21 are provided, they can be disposed at 120° from each other.

The fins 21 that protrude from the head portion 24 can lie on a common lying plane. The housing seatings 23 are made in the aperture 22 and can also lie on a common lying plane.

According to possible embodiments (figs. 10-13), at least one of the fins 21 and one of the housing seatings 23 extends with an opening angle greater than at least another one of the fins 21 and the housing seatings 23, respectively.

This configuration defines a univocal positioning of the fins 21 in the respective housing seatings 23.

This renders the association between the implant 11 and the accessory body 12 precise, and at the same time allows to prevent possible incorrect connections between them.

According to possible solutions, the fins 21 can have a plane inclined on the surface 25 farthest from the end 16a from which the attachment portion 20 protrudes, said inclined plane being configured to generate a frictional connection in contact with the innermost wall, for example the bottom wall of the aperture 22.

The frictional contact between these two surfaces guarantees a solid stability of the connection between the implant 11 and the accessory body 12.

According to possible solutions, the attachment portion 20 can comprise an abutment portion 26 located between one of the fins 21 and the end 16 from which the attachment portion 20 protrudes, configured to define in cooperation with an abutment wall located in the aperture 22 the end-of-travel position between the implant 11 and the accessory body 12.

The abutment portion 26 can comprise a tongue and can be located between the surface of the end 16a, 16b from which the attachment portion 20 and the widest surface of the fin 21 protrude.

The abutment wall can comprise a tongue mating with the abutment portion 26 located between the innermost surface of the aperture 22 and the widest housing seating 23, or it can correspond with one of the walls of the widest housing seating 23.

The abutment portion 26 is able to determine the end-of-travel between the implant 11 and the accessory body 12 once the attachment portion 20 has been inserted and rotated in the aperture 22.

The fins 21, of which at least one has an opening angle wider than the others, and the abutment portion 26 generate conditions for a guided positioning of the implant 11 with respect to the accessory body 12 which prevents possible errors in positioning and connection.

According to possible embodiments, the attachment portion 20 is provided with a support base 27 located on the end 16a, 16b from which the attachment portion 20 protrudes. The fins 21 are positioned above the support base 27.

The support base 27 has a flared conformation with a conicity which narrows toward the end 16a or 16b.

The aperture 22 that receives the attachment portion 20 is made in a base surface 31 having a concave conformation, with a shape mating with the support base 27.

The base surface 31 is positioned to completely support and cover the support base 27.

During use, the support base 27 is positioned in close contact with the base surface 31, and the connection means 13 are configured to ensure their reciprocal contact.

The support base 27 is also provided with a perimeter edge 28, while the base surface 31 is provided with a clamping portion 29, or clamping edge, located, during use, around the perimeter edge 28. The clamping portion 29, or clamping edge, can extend axially in a direction parallel to the direction of opening of the aperture 22, that is, the clamping portion 29 can be defined by a circular ridge protruding from the base surface 31. Furthermore, the clamping portion 29 overlaps and completely surrounds the perimeter edge 28.

This makes it possible to clamp the clamping portion 29 to the perimeter edge 28, determining a stable connection impermeable to possible infiltrations from the outside. In fact, the reciprocal coupling of the support base 27 and the base surface 31 does not allow infiltration from the outside toward the inside of the aperture 22. The presence of the clamping portion 29 and of the perimeter edge 28 increases the sealing action against infiltrations.

In accordance with possible solutions, it can be provided that the clamping portion 29 and the perimeter edge 28 extend substantially in continuity with respect to each other, that is, the interface zone between the clamping portion 29 and the perimeter edge 28 is free of steps, shoulders, or cavities in which any liquids can stagnate and infiltrate toward the aperture 22.

This seal is further completed at the time when the dental prosthesis 14 is positioned, which according to some embodiments, shown for example in fig. 2, encloses both the clamping portion 29 and the perimeter edge 28 inside.

This is also made possible by the fact that there is continuity between the clamping portion 29 and the perimeter edge 28.

According to possible embodiments, the end 16a of the implant 11 from which the attachment portion 20 protrudes, or in which the aperture 22 is made, is provided with at least one surface groove 30 which extends transversely with respect to the oblong development of the implant 11 and is configured to accommodate the edge of the base of a dental prosthesis 14.

In particular, it can be provided that the groove 30 is defined by a rectilinear incision made in the end 16a of the implant 11 and that when it is in use, it defines with the dental prosthesis 14 a same-shape coupling which prevents reciprocal disconnection of the accessory body 12 from the implant 11. During the installation of the dental prosthesis 14, for example by cementing, or coating, the material of which the dental prosthesis 14 is defined is put to fill the groove 30. This filling of the groove 30 defines a constraint against the rotation of the accessory body 12 with respect to the implant 11.

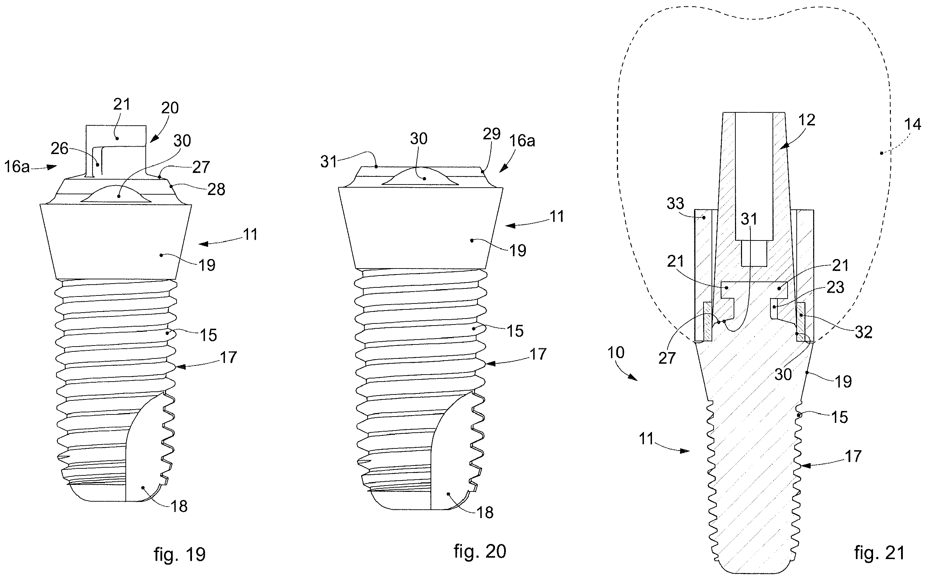

According to another embodiment of the present invention (fig. 21), the prosthetic device 10 according to the present invention can comprise an annular element 32 which can be coupled with the implant 11 and the accessory body 12 and can be positioned to surround peripherally the interface zone between the support base 27 and the base surface 31. The annular element 32 can be suitably shaped to be inserted into the at least one groove 30 provided in the end 16a of the implant 11.

According to a possible solution, the annular element 32 can be coupled with a support element 33 which surrounds the annular element 32 externally and allows it to be handled.

In particular, the support element 33 can have a tubular conformation to allow the accessory body 12 to be inserted through it.

In accordance with other embodiments, the support element 33 can be made of a disposable material, for example during the manufacturing step of the dental prosthesis 14. By way of example only, it can be provided that the disposable material melts during the manufacturing operations of the dental prosthesis 14.

In this way it is possible to obtain the dental prosthesis 14 with the annular element 32 already integrated in the correct position of possible installation, thus preventing an incorrect installation and/or orientation of the dental prosthesis 14. The annular element 32, with the respective support element 33, can be used during the operations to make the cast of a tooth, and the particular conformation of the annular element 32 ensures that also the dental prosthesis 14 obtained from making the cast is correctly oriented with respect to the prosthetic device 10 with which it will be coupled.

According to the present invention, the connection means 13 allow to simulate a "one-piece" dental prosthetic device even though it is a two-phase prosthetic device.

According to the present invention, it is not necessary to use a connection screw passing through the implant 11 and the accessory body 12, or an attachment conical pair, or both, to stabilize the connection between them.

The surgical insertion is similar to the procedure for a "one piece", since it can be inserted through the mucosa without proceeding with the detachment of a mucous flap.

In some cases it can be helpful, for aesthetic and functional reasons, to remove a small mucus operculum, for example, using a suitable circular scalpel.

The configuration of the implant 11 allows the operator to define the most favorable moment to stop the endosseous insertion of the implant 11 itself, and hence to guarantee the maximum aesthetic and functional result.

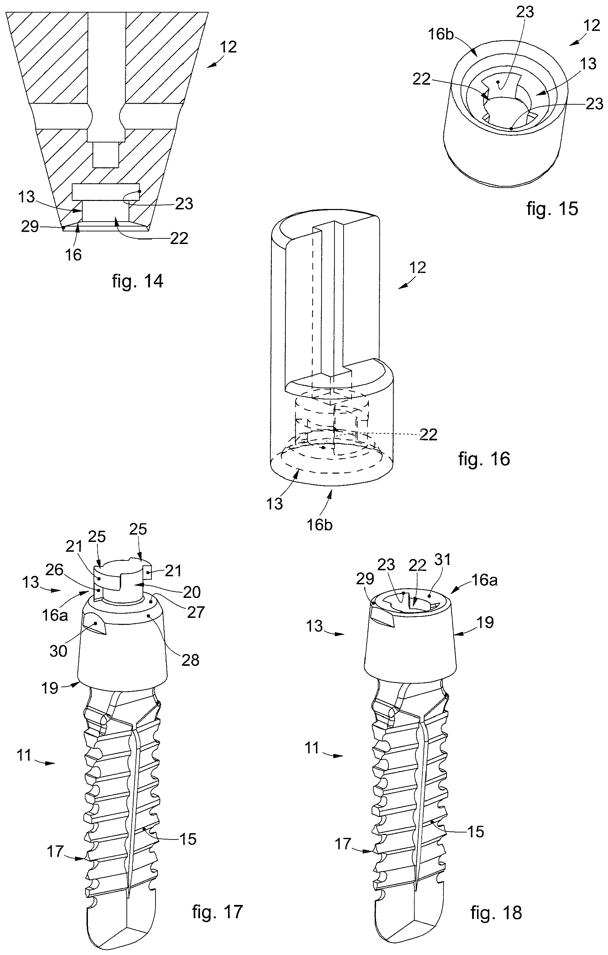

The mucosal space created by the removal of the operculum can be occupied by an accessory body 12 such as a covering cap (shown in fig. 15), which surrounds the emerging part of the implant 11 and which is connected to the latter by connection means 13.

The cap can also act as a healing cap that does not require any crimping of the soft tissues, because they are already ready to accommodate the abutment 12 and the dental prosthesis 14, ensuring maximum functional and aesthetic safety.

For these reasons, the present invention can be defined as minimally invasive surgically. The surgical phase is one-time, possibly without removal of the mucous flap or with minimal removal thereof.

During the insertion of the implant 11, the operator positions the emerging part of the implant 11 in the most suitable position to guarantee a satisfactory prosthetic solution from an aesthetic and functional point of view.

Since it is not hollow, the implant 11 does not require embedding, but it is sufficient to apply a covering cap 12 to surround the connection means 13. This promotes the healing of the tissues intended to receive the abutment 12 and the dental prosthesis 14.

Once the period of osseo-integration has passed, the prosthetic phase is carried out, which requires two accessory bodies 12, that is, an implant analog and a prosthetic transferor or position abutment.

The implant analog is similar to the implant 11, except in the part of the threaded portion 17 suitably shaped to be inserted into a plaster model.

The prosthetic transferor or position abutment is similar to the definitive abutment, except in the part of the body 31 which is cylindrical with a vertical cut in the head which determines a hemi-section of the body 31 itself.

This shaping of the position abutment allows to reposition it in the impression once it has been removed from the implant 11 in the mouth.

The abutment is connected to the implant analog in the laboratory and is subsequently processed by the laboratory technician to shape the abutments and to structure the dental prosthesis 14.

All this is possible thanks to the particular connection made by the connection means 13 connecting the implant 11 to the accessory body 12, since thanks to it errors of transfer or positioning cannot possibly occur.

The connection means 13 guide the operator during the assembly step of the implant 11 to the accessory body 12, without causing uncertainty or position changes.

According to the present invention, the connection means 13 represent a simplification both of the surgical step and of the prosthetic step.

Thanks to the present invention, the risks of de-coupling and possible complications are substantially eliminated, such as the unscrewing or - worse - the breaking of the connection screw typically present in known dental prosthetic devices.

According to the present invention, the connection means 13 guarantee a mechanical seal between the implant 11 and the accessory body 12 as in conical pair implants, but are less complex and articulated.

According to possible formulations, the present invention also concerns an osseo-integrable implant 11 provided at one end 16 with connection means 13 to connect the latter to the accessory body 12.

According to possible formulations, the present invention also concerns an accessory body 12 such as an abutment, a cap, a prosthetic transferor or other similar or comparable accessory body, provided at one end 16 with connection means 13 to connect the latter to an osseo-integratable implant 11.

According to a possible formulation, the present invention also concerns a method to connect an osseo-integratable implant 11 to an accessory body 12 such as an abutment, a cap, a prosthetic transferor or other similar or comparable accessory body, which provides to insert the attachment portion 20 protruding from one end 16 of the implant 11 or of the accessory body 12 provided with fins 21 protruding radially from the attachment portion 20 itself into the aperture 22 made in one end 16 of the other of either the accessory body 12 or the implant 11, provided with housing seatings 23 made radially in the aperture 22, and to rotate the attachment portion 20 in the aperture 22 until each of the fins 21 is housed in the respective housing seatings 23.

The connection method is much simpler and less articulated than in the state of the art, since it provides two installation steps which obtain a univocal positioning and connection of the implant 11 and the accessory body 12.

This significantly prevents the possibility of errors or incorrect positioning that typically cause mechanical stresses that can generate unwanted complications.

It is clear that modifications and/or additions of parts can be made to the dental prosthetic device 10, the implant 11 and the accessory body 12 as described heretofore, without departing from the field and scope of the present invention.

It is also clear that, although the present invention has been described with reference to some specific examples, a person of skill in the art shall certainly be able to achieve many other equivalent forms of dental prosthetic device 10, the implant 11 and the accessory body 12, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Dental prosthetic device comprising an osseo-integratable implant (11), an accessory body (12), and connection means (13) to connect said implant (11) to said accessory body (12), wherein said connection means (13) comprise an attachment portion (20) protruding from one end (16a, 16b) of said implant (11) or of said accessory body (12) and provided with fins (21) protruding radially from said attachment portion (20) itself, and an aperture (22) made in one end (16a, 16b) of the other of either said accessory body (12) or said implant (11), said aperture (22) being provided with housing seatings (23) made radially in said aperture (22) and each of said housing seatings (23) being configured to house one of said fins (21), said attachment portion (20) and said aperture (22) defining a bayonet-type coupling, **characterized in that** said attachment portion (20) is provided with a support base (27) with a flared conformation with a conicity that narrows toward the respective end (16a, 16b) in which the attachment portion (20) is made; **in that** said aperture (22) that receives the attachment portion (20) is made in a base surface (31) with a concave conformation having a mating shape with said support base (27), **and in that** said support base (27) is located in close contact with said base surface (31) and said connection means (13) are configured to ensure their reciprocal contact.

2. Device as in claim 1, **characterized in that** said support base (27) is provided with a perimeter edge (28) and said base surface (31) is provided with a clamping portion (29) located, during use, around said perimeter edge (28).

3. Device as in claim 2, **characterized in that** said clamping portion (29) extends axially in a direction parallel to the opening direction of the aperture (22), to define a ridge protruding from said base surface (31).

4. Device as in claim 2 or 3, **characterized in that** the clamping portion (29) and the perimeter edge (28) extend substantially continuously with respect to each other, that is, the interface zone between the clamping portion (29) and the perimeter edge (28) is without steps, shoulders or cavities.

5. Device as in any claim hereinbefore, **characterized in that** the end (16a) of said implant (11) from which the attachment portion (20) protrudes, or in which the aperture (22) is made, is provided with at least a surface groove (30) that extends transversely with respect to the oblong development of the implant (11) and is configured to house, directly or indirectly, the edge of the base of a dental prosthesis (14).

6. Device as in claim 5, **characterized in that** said groove (30) is defined by a rectilinear incision made in said end (16a) of the implant (11).

7. Device as in any claim hereinbefore, **characterized in that** it comprises an annular element (32) which can be coupled to the implant (11) and to the accessory body (12) and can be positioned to peripherally surround the interface zone between the support base (27) and the base surface (31).

8. Device as in claim 5 or 6, and 7, **characterized in that** said annular element (32) is shaped so as to be inserted in the at least one groove (30) provided in the end (16a) of the implant (11).

9. Device as in any claim hereinbefore, **characterized in that** said attachment portion (20) has a head portion (24) opposite said end (16) from which said attachment portion (20) extends and from whose perimeter said fins (21) extend, each for a specific angle of opening, **and in that** each of said housing seatings (23) extends into the perimeter of said aperture (22) for an angle of opening equal to a corresponding angle of opening of one of said fins (21).

10. Device as in any claim hereinbefore, **characterized in that** said fins (21) and said housing seatings (23) are angularly equidistant, **and in that** at least one of said fins (21) and of said housing seatings (23) extends with a bigger angle of opening than at least another of said fins (21) and at least another of said housing seatings (23) respectively.

11. Device as in any claim hereinbefore, **characterized in that** said fins (21) have an inclined plane on the surface (25) most distant from said end (16) from which said attachment portion (20) protrudes, said inclined plane being configured to generate a frictional connection in contact with the innermost wall of said aperture (22).

12. Device as in any claim hereinbefore, **characterized in that** said attachment portion (20) comprises an abutment portion (26) located between one of said fins (21) and said end (16) from which said attachment portion (20) protrudes, configured to define, in cooperation with an abutment body located in said aperture (22), the end-of-travel position that limits the rotation between said implant (11) and said accessory body (12).

13. Osseo-integratable implant provided at one end (16) with connection means (13) to connect the latter to an accessory body (12) such as a stump, a cap, a prosthetic transferor or other similar or comparable accessory body, wherein said connection means (13) comprise an attachment portion (20) protruding from said end (16) and provided with fins (21) protruding radially from said attachment portion (20) itself, or an aperture (22) made in said end (16) provided with housing seatings (23) made radially in said aperture (22), said attachment portion (20) and said aperture (22) defining, during use, a bayonet-type coupling, **characterized in that** if said implant comprises said attachment portion (20), the latter is provided with a support base (27) with a flared conformation with a conicity that narrows toward the respective end (16a) in which it is made, while if said implant comprises said aperture (22) that receives the attachment portion (20), said aperture (22) is made in a base surface (31) with a concave conformation with a shape mating with said support base (27), **and in that**, during use, said support base (27) is located in close contact with said base surface (31) and said connection means (13) are configured to ensure their reciprocal contact.

14. Accessory body such as a stump, a cap, a prosthetic transferor or other similar or comparable accessory body, provided at one end (16) with connection means (13) to connect the latter to an osseo-integratable implant (11), wherein said connection means (13) comprise an attachment portion (20) protruding from said end (16) and provided with fins (16) protruding radially from said attachment portion (20) itself or an aperture (22) made in said end (16) provided with housing seatings (23) made radially in said aperture (22), said attachment portion (20) and said aperture (22) defining, during use, a bayonet-type coupling, **characterized in that** if said accessory body comprises said attachment portion (20), the latter is provided with a support base (27) with a flared conformation with a conicity that narrows toward the respective end (16b) in which it is made, while if said accessory body comprises said aperture (22) that receives the attachment portion (20), said aperture (22) is made in a base surface (31) with a concave conformation with a shape mating with said support base (27), **and in that** during use said support base (27) is located in close contact with said base surface (31) and said connection means (13) are configured to ensure their reciprocal contact.
